# EUROPEAN PATENT SPECIFICATION

(11) **EP 1 075 133 B1**
(45) Date of publication and mention of the grant of the patent: **09.09.2009**
(21) Application number: 98302371.4
(22) Date of filing: 27.03.1998
(51) Int. Cl.: H04M 15/00, H04Q 3/00

(54) **Billing system**
Abrechnungssystem
Système de facturation

(43) Date of publication of application: 07.02.2001
(73) Proprietor: BRITISH TELECOMMUNICATIONS public limited company, London EC1A 7AJ (GB)
(72) Inventor: Morris, David, Sudbury, Suffolk, CO10 OYZ (GB)

(56) References cited:
- WO-A-96/04742
- GB-A- 2 294 566
- US-A- 5 008 929
- US-A- 5 287 270
- US-A- 5 555 290
- US-A- 5 606 601

## Description

The present invention relates to telecommunications networks and more particularly to services provided by such networks.

It is known to provide customers with a facility whereby at the end of call the customer is called back and an announcement of the estimated cost of the call is made. Usually, such service is only provided if the customer has pre-requested it by dialling a code prior to dialling the telephone number required. Such service is sometimes called "ADC" service - "Advice of duration and cost".

While such a service is useful for an immediate call record customers may sometimes wish to recover call details at a later stage - for example to check on telephone usage or to recall people called.

US patent 5,555,290 describes a long distance telephone switching system that provides enhanced services to customers such as audio news, conference calling, voice messaging and message forwarding. Also described is the collection and storage of call data for generating customer bill records.

According to the present invention there is provided a telecommunications network comprising a plurality of switches for providing switchable telephony services between callers, the network including means to store a record of each call through the system, each record comprising data identifying a calling party, a called party number, call duration and time of calling; means responsive to signalling to retrieve one or more records associated with a particular calling party and means to transmit information derived from said associated records; characterised in that the signalling is from a calling customer on a line associated with the network, and the particular calling party is identified from said line.

The particular calling party may be identified from the calling line identity associated with said line.

The transmission of information may be by means of a speech output device, by way of facsimile transmission or by means of electronic messaging such as to an electronic mail address or a visual display unit.

If the transmission is to a facsimile machine, the calling customer may be prompted to enter a telephone number for such a device. Alternatively, a previously identified telephone number stored by storage means in the network may be used.

An electronic mail address may be stored in storage means of the network if electronic messaging is to be used or an internet address stored or determined for transmission of electronic display messages.

Where call record requests originate from an identifiable calling line and a report is requested for that line the control means will not require additional identification of the requesting person. Optionally however a personal identification number maybe associated with calling party telephone lines either for additional security in respect of request made from the calling party telephone or to permit requests to be filed in respect of the telephone line from another telephone line or by way of electronic access such as through electronic mail messaging or by way of internet requests.

Information transmitted may be in respect of a pre-determined number of calls, a pre-determined period of time or in respect of calls made since the last report requested. Alternatively the customer may be permitted to specify the period for which record information is to be supplied.

In addition to the provision of basic call record information, the network control means may have access to a billing system computer so that the cost of each call allowing for discounts available to the customer may be provided.

A telecommunications network in accordance with the invention will now be described by way of example only with reference to the accompanying drawings of which:-
Figure 1 is a block schematic diagram of a telecommunications network in accordance with the invention;
Figure 2 is a flow chart showing a method of implementing the invention on a telecommunications switch:
Figures 3 and 4 form a flow chart which shows a first method of implementing the invention in a so-called intelligent network: and
Figure 5 is a flow chart which shows a method of implementing the invention using an internet server.

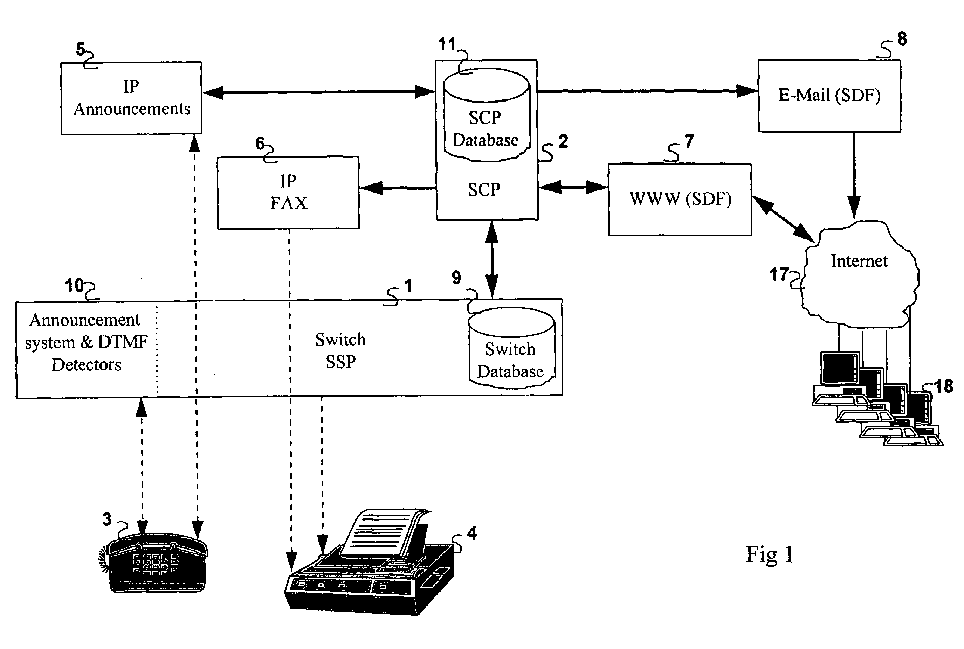

Referring to Figure 1, the public switched telephone network (PSTN) is represented by a switch 1 of which there may be many interconnected to provide telephone services to customer lines represented by a telephone 3 and a facsimile machine 4.

The switch 1 may be of the kind included in a so-called intelligent network, in which case it may be considered as a service switching point (SSP) and will include a measure of intelligence (not separately shown) which will be triggered by network events to apply by way of signalling paths to a service control point (SCP) 2 of which there may be several. The SCP 2 uses transferred data relating, for example, the origin of a current call, the digits dialled, class of service and the like to provide instructions to SSPs 1.

In the intelligent network situation, certain functions may be provided by intelligent peripherals within the network which can, under control of the SCP 2 and the SSP 1 be connected to any subscriber line (3,4). The schematic shows an announcement peripheral 5 which is capable of accepting instructions from the SCP 2 to make voice announcements to a connected line and to collect multi-frequency tone responses or voice responses from the line. Thus under control of the SCP 2 and SSP 1 the intelligent peripheral 5 may be used in a number of different ways, as hereinafter described. Also included in the network is a further intelligent peripheral 6 capable of generating and transmitting messages to facsimile machines.

At the SCP 2 (although such functionality could be provided at one of the switches 1) service data functions allow communication between the PSTN and the so-called internet 17 to permit communication with customer internet terminals 8, for example, personal computers or other suitable terminals which have internet access by way of private intranets.

Two service data functions are shown, a function 7 for direct internet two-way communications by way of the World-wide Web (www) and an electronic mail service data function 8 for generating and transmitting mail messages to a customer's electronic mail box.

Note that in the present schematic the switch 1 includes a database 9 to which call records may be written prior to transfer to a billing system (not shown) and may also include direct announcement system and dual tone multi-frequency (DTMF) detectors 10 for communicating with customer telephones 3 as hereinafter described.

Note also that the SCP 2 includes a database 11 and both the switch and SCP may be capable of retrieving information from a network billing system.

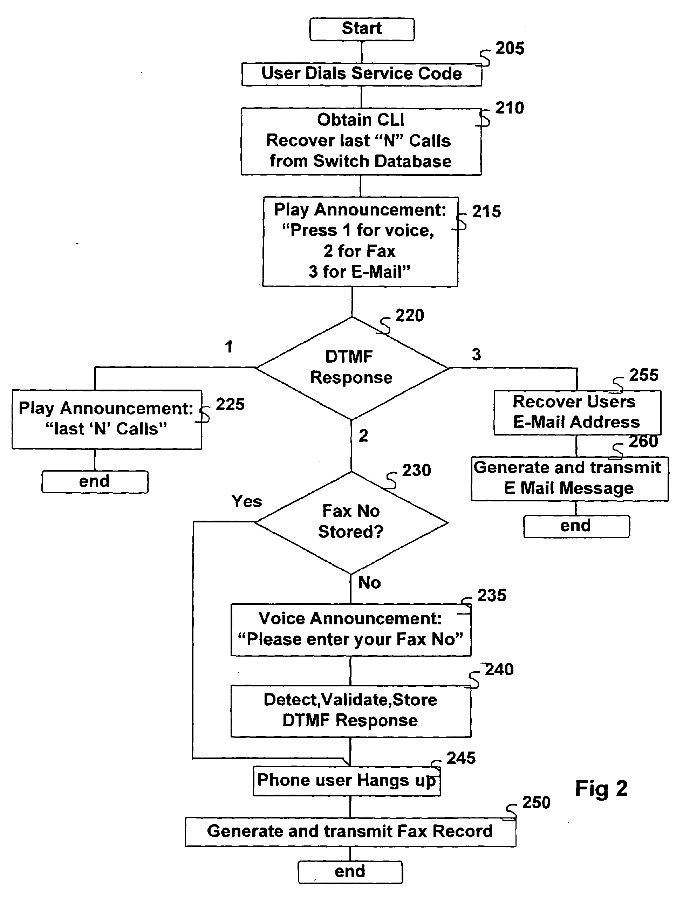

Turning to Figure 2, where the system of the present invention is to be implemented at a switch, for example, at a digital local exchange, a digital main switching unit or group switching unit of a PSTN at a level close to a requesting customer 3 then a user dials the required service code, as indicated at step 205, control means of the switch 1 determines the identity of the calling line 3 (hereinafter CLI, calling line identity) and on the basis of the CLI recovers from the switch database 9 details of the call records relating to the latest calls originating from the calling line. The number of call records to be recovered may be determined as either a fixed number of calls, for example eight or may be based on a predetermined time period, for example 24 hours or may simply be a listing of all calls made from the calling line since the last application for call details, this is shown at step 210.

Having determined that there are call records to be announced to the customer (step not shown), the switch causes the associated announcement system 10 to play an announcement to the connected telephone line 3 giving the user the option to request delivery of the call record report either on line to the connected telephone or to a facsimile machine or by electronic mail. DTMF detectors in the announcement system 10 await the customer keying one of the specified digits to indicate the required delivery method. Checks on the validity of a keyed response and time-out determination that the calling customer makes a response and checking to determine whether the call has cleared are all carried out, but for simplicity the steps are not shown here.

Customers keying an invalid digit may be requested to key again.

For the avoidance of doubt it is here noted that the system may require entry of a personal identification number (PIN) in addition to the delivery selection response so that call record reports are only provided to an authorised user of the telephone 3.

Returning now to step 220, if the keyed response indicates that the customer wishes an on-line voice delivery of the call record report then the system 10 plays the call record report on-line to the customer telephone 3. Step 225 as shown is again a simplified view for the purposes of description, all normal telephony and announcement functions being included. Such functions include but are not limited to monitoring of the telephone line 3 to determine whether the customer has cleared, monitoring for customer interrupt by DTMF to request repetition of a record and confirmation by customer action that, at the end of the report, no repeat announcement is required.

Returning to step 220, assuming that the customer requests the report to be delivered by facsimile, then the switch database is interrogated for a facsimile line telephone number. Thus, at step 230 if a facsimile number is not stored in the database 9 then the announcement system 10 will request, at step 235, entry of an appropriate telephone number as shown at step 240 the customer response by use of the keypad of customer telephone 3 is validated and stored to enable a facsimile call to occur subsequently.

At step 245, using either a stored telephone number or the number entered by the customer in response to the request at step 235, the line is monitored of the telephone user to clear the call particularly if the facsimile telephone number and the customer telephone number are identical. Once the customer has cleared then at step 250 the control system creates the required document format for transmission to a facsimile machine incorporating the recovered data from step 210 and causes this to be transmitted to the customer line.

Again appropriate checks may be carried to determine the validity of the customer's responses, to determine if the customer clears down prior to completion of entry of a facsimile number etc. Again in a step not shown, if a facsimile number is associated with the CLI in the database 9 the customer may be given the opportunity after step 230 to amend the stored number either temporarily or permanently.

Returning again to step 220, if the customer requests an electronic mail delivery of the call record report, then at step 255 the electronic mail address associated with the CLI as held in the switch database 9 is obtained and an appropriate electronic mail message is generated and transmitted to the customer by way of the internet 17.

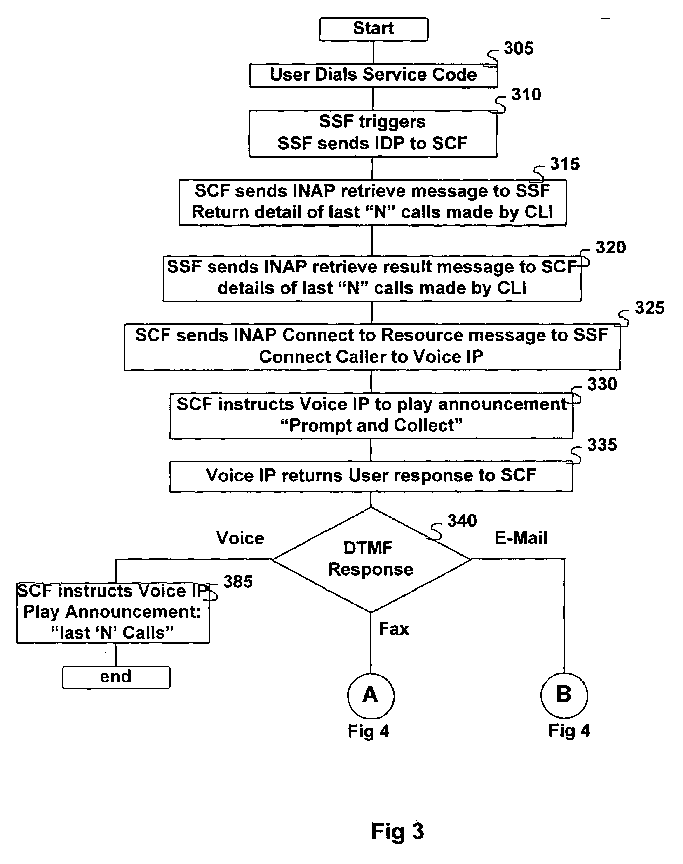

Having considered a basic service which may be provided on a switch-based system, a network-based system using the SCP 2 of Figure 1 will now be described referring additionally to Figure 3.

In Figure 3 when the user dials a service code as indicated at step 305, the service switching function (SSF) in the SSP 1 triggers and sends an intelligent network application protocol (INAP) message indicative of an initial detection point (trigger point) to the service control function (SCF) or SCP 2 this is indicated at step 310. The SCF sends an INAP retrieve message to the SSF with a payload requesting that the SSF returns detail of the latest set of calls made from the identified CLI. As with a switch-based service the number of call records to be obtained may be user selectable to be a fixed number, a number over a period of time preceding application or all calls made since the last application to the system. On receipt of the message generated at step 315, the SSF 1 obtains the result and forwards an INAP retrieve result message with the requested details as indicated at step 320. At step 325 the SCF now forwards an INAP connect to resource message to the SSF to cause the SSP to connect the announcement intelligent peripheral 5 through to the calling line 3. The SCF 11 is responsible for instructing the announcement intelligent peripheral 5 to play a prompt message and to collect the caller's response. The voice intelligent peripheral 5 therefore plays a message and collects a response in a similar manner to that described in Figure 2. Thus at step 335 the intelligent peripheral 5 returns the user's response to the SCF which then validates the response and, as shown at step 340, selects the manner in which information is to be transferred to the customer in dependence upon the response received.

Thus, if the customer has requested a voice announcement of the call records then the SCF 11 causes the intelligent peripheral 5 to effect an announcement of the call record report at step 385. Any customer response signalling will be handled by the intelligent peripheral 5 returning the responses to the SCP 11 which will make the necessary instructions for the intelligent peripheral 5 to react to further customer inputs.

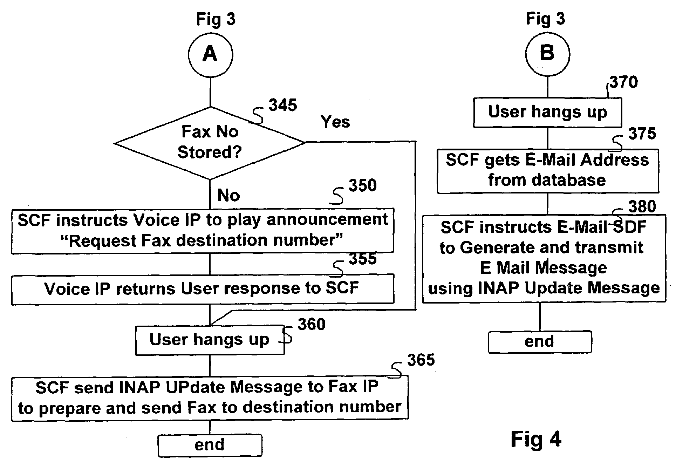

If as indicated at step 340 the customer indicates a facsimile request, then the SCF 2 will interrogate the database 11 for a facsimile number associated with the requesting calling line interface as indicated at step 345 of Figure 4 to reference is now additionally made. As with a switched-based service if there is a facsimile number stored at step 345 the customer may be advised using the intelligent peripheral 5 of the current stored number and be invited to confirm that this is the number to which the call record should be facsimile.

If there is no facsimile number stored, then at step 350 the intelligent peripheral 5 is instructed by the SCF 2 to request a facsimile destination number from the customer at the customer's response is retrieved and forwarded to the SCF 2 at step 355. Once the user clears the line at step 360, then an INAP update message is sent to the facsimile intelligent peripheral 6 with a payload including the telephone number to be called and the call records to be delivered such that the intelligent peripheral 6 at step 365 creates an despatches a facsimile message to the customer's 4.

Returning again to step 340 of Figure 3, if the customer indicates an electronic mail request, then at step 370 of Figure 4 when the user hangs up the SCF 2 recovers the electronic mail address from the database 11 at step 375 and instructs an electronic mail service data function (SDF) 8, at step 380, to generate and transmit an electronic mail message to the customer by way of the internet 17. Note that the instruction from the SCF to the SDF is by use of an INAP update message.

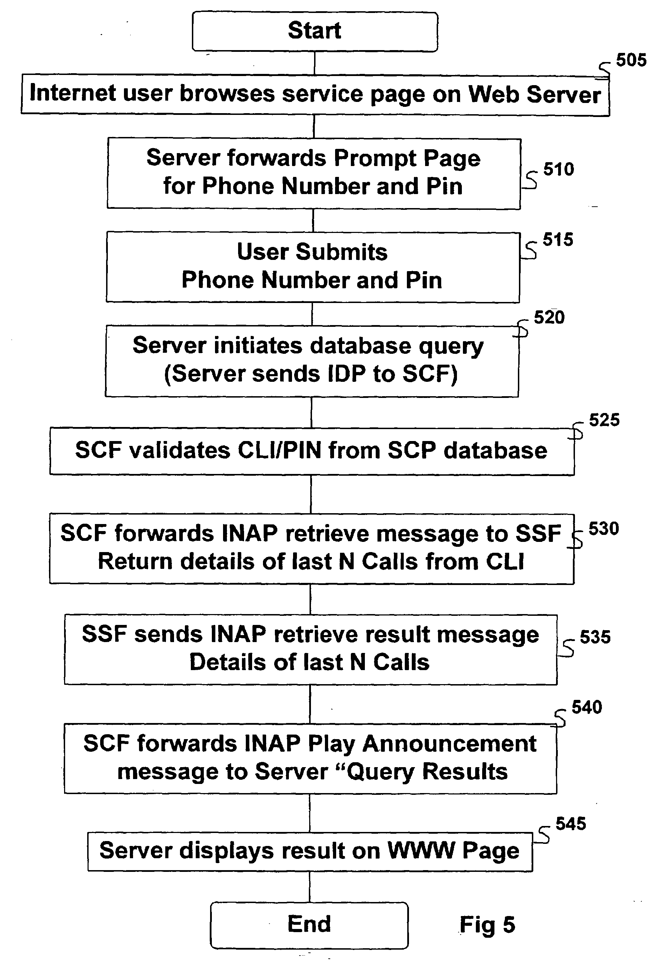

Referring to Figures 1 and 5, when the customer is browsing web pages in known manner using one of the terminals 8 via the internet 17 and reaches an appropriate service page of the www service data function or server 7, as indicated at step 505, a page is generated and forwarded for display on the customer's screen with appropriate entry positions for a telephone number and PIN number one or both of which may be in an encoded format for return using secure network connections. Thus, as indicated at step 515, once the user has entered a telephone number and PIN number to validate the record request attempt then the pages submitted in known manner to the server using internet protocol data packages. The web server 7, a service data function, will initiate a database query with the service control function 2 using an INAP initial detection point message. The message includes the service requested, the CLI (the telephone number entered by the customer) and the PIN. The CLI and PIN combination is validated by the SCF 2 using the database 11. Assuming that the CLI and PIN correctly validate then the SCF will forward an INAP retrieve message to the SSF 1 with a payload requesting the details of the latest calls with similar boundaries to those hereinbefore described with reference to Figures 2 and 3.

As shown at step 535, the SSF 1 returns the call details as a payload in an INAP retrieve result message which enables the SCF 2 to forward a play announcement message to the server 7 including the results of the query made indicating the call records retrieved. The SDF 7 will assemble the results and may again transmit using secure protocols the results to the customer by way of the internet 17 so that the results are displayed as a www page at the customer's terminal 18.

As and alternative to the result being displayed as a www page the customer may request that the result be forwarded as an electronic mail message in which case the service 7 will create an electronic mail message with an appropriate address header for transmission to the customer's electronic mail box.

It will be appreciated that while the system as hereinbefore described in three versions simply returns call records, the call record information may be used by the system to provide additional information such as the name of the destination rather than just the destination numbers and in combination with an appropriate billing records system could provide interim billing information.

The customer may be allowed to select from records associated with the particular CLI such as calls which may have been made using chargecards, for example, billable to the same CLI account. Where other communications options are available to the customer, for example, where mobile telephony is also in use, then call records for the customer's overall usage of all telecommunications networks may be provided.

In a further development, the customer may be allowed to contact the service using the same or a different service code from any telephone and may be prompted to enter the telephone number of the line for which billing records are required. Note that in this instance where the request comes from other than the CLI for which the call records are being requested, password or PIN protection will be used to avoid illicit access to the customer's personal call information.

It will be realised that while the system hereinbefore described retrieves call records relating to calls made from the customer telephone 3, it would be possible to modify the system to provide details of the latest calls made to the customer line. Thus, if a customer has been absent for a period of time whereas current services allow for access to the last number from which a call originated a listing of multiple calls which have arisen may be provided in a usable format by, for example, facsimile or electronic mail. Such a service could be of use to call centre operators for example who might request records of all unanswered call attempts to the called centre number to enable follow up calls from the call centre to unsuccessful calling customers.

## Claims

1. A telecommunications network (1) comprising a plurality of switches for providing switchable telephony services between callers (3), the network including:
means (9) to store a record of each call through the system, each record comprising data identifying a calling party, a called party number, call duration and time of calling;
means (2) responsive to signalling to retrieve one or more records associated with a particular calling party and means to transmit information derived from said associated records; **characterised in that**
the signalling is from a calling customer on a line associated with the network, and the particular calling party is identified from said line.

2. A telecommunications network as claimed in claim 1, wherein the particular calling party is identified from the calling line identity associated with said line.

3. A telecommunications network as claimed in claims 1 or 2, in which the calling customer may select a transmission medium from a plurality of transmission media.

4. A telecommunications network as claimed in claims 1, 2 or 3, in which the transmission of information is by means of a speech output device.

5. A telecommunications network as claimed in claim 4, in which the calling customer may interrupt the transmission of information to provide further instruction relating to the delivery.

6. A telecommunications network as claimed in any preceding claim, in which the transmission of information is to a facsimile machine.

7. A telecommunications network as claimed in claim 6, in which control means of the network stores a respective telephone number for a facsimile machine to which information related to the particular calling party is transmitted.

8. A telecommunications network as claimed in claim 6, in which the calling customer is prompted to enter a telephone number to which a facsimile record is to be transmitted.

9. A telecommunications network as claimed in claim 1 or claim 2, in which information is transmitted to an electronic mail address.

10. A telecommunications network as claimed in any preceding claim, in which the calling customer is prompted to enter a personal identification number to verify authorisation to receive the transmitted information.

11. A telecommunications network as claimed in any preceding claim, in which the number of records in a report is selectable from:
(i) a predetermined number of call records:
(ii) a number of call records occurring during a predetermined time period: and
(iii) calls made since the last requested report.

12. A telecommunications network as claimed in any preceding claim, in which the transmitted information includes costing information obtained from a network billing system.

13. A telecommunications network as claimed in any preceding claim, further including server means having a connection to a packet switching network and responsive to customer terminal access to the server to provide a call record report in respect of a calling party telephone line.

14. A telecommunications network as claimed in claim 13 wherein the packet switching network is the internet.

## Patentansprüche

1. Telekommunikationsnetzwerk (1) mit mehreren Vermittlungsstellen zur Bereitstellung von vermittelbaren Telefoniedienstleistungen zwischen Anrufern (3), wobei das Netzwerk Folgendes beinhaltet:
Einrichtungen (9) zum Speichern einer Aufzeichnung von jedem Anruf durch das System, wobei jede Aufzeichnung Daten umfasst, die einen anrufenden Teilnehmer, eine angerufene Teilnehmernummer, die Anrufdauer und die Anrufzeit identifizieren;
Einrichtungen (2), die auf Signalisieren reagieren, um eine oder mehrere Aufzeichnungen abzurufen, die zu einem bestimmten anrufenden Teilnehmer gehören, und Einrichtungen, um Information zu übertragen, die von den zugehörigen Aufzeichnungen abgeleitet ist, **dadurch gekennzeichnet, dass**
das Signalisieren von einem anrufenden Kunden auf einer dem Netzwerk zugehörigen Leitung stammt und der bestimmte anrufende Teilnehmer aus der Leitung identifiziert wird.

2. Telekommunikationsnetzwerk nach Anspruch 1, wobei der bestimmte anrufende Teilnehmer aus der der Leitung zugehörigen Anrufleitungsidentität identifiziert wird.

3. Telekommunikationsnetzwerk nach Anspruch 1 oder 2, bei dem der anrufende Kunde aus mehreren Übertragungsmedien ein Übertragungsmedium auswählen kann.

4. Telekommunikationsnetzwerk nach Anspruch 1, 2 oder 3, bei dem die Übertragung von Information mittels einer Sprachausgabevorrichtung erfolgt.

5. Telekommunikationsnetzwerk nach Anspruch 4, bei dem der anrufende Kunde die Übertragung von Information unterbrechen kann, um eine weitere Anweisung, die sich auf die Weitersendung bezieht, bereitzustellen.

6. Telekommunikationsnetzwerk nach irgendeinem vorhergehenden Anspruch, bei dem die Übertragung von Information an ein Telefaxgerät erfolgt.

7. Telekommunikationsnetzwerk nach Anspruch 6, bei dem eine Steuereinrichtung des Netzwerks eine entsprechende Telefonnummer für ein Telefaxgerät speichert, an welches Information, die sich auf den bestimmten anrufenden Teilnehmer bezieht, übertragen wird.

8. Telekommunikationsnetzwerk nach Anspruch 6, bei dem der anrufende Kunde aufgefordert wird, eine Telefonnummer einzugeben, an die eine Telefaxaufzeichnung übertragen werden soll.

9. Telekommunikationsnetzwerk nach Anspruch 1 oder Anspruch 2, bei dem Information an eine Elektronische-Post-Adresse übertragen wird.

10. Telekommunikationsnetzwerk nach irgendeinem vorhergehenden Anspruch, bei dem der anrufende Kunde aufgefordert wird, eine persönliche Identifikationsnummer einzugeben, um die Berechtigung zum Empfang der übertragenen Information zu überprüfen.

11. Telekommunikationsnetzwerk nach irgendeinem vorhergehenden Anspruch, bei dem die Anzahl von Aufzeichnungen in einem Bericht ausgewählt werden kann aus:
(i) einer vorgegebenen Anzahl von Anrufaufzeichnungen;
(ii) einer Anzahl von Anrufaufzeichnungen, die während einer vorgegebenen Zeitdauer erfolgt sind; und
(iii) Anrufe, die seit dem letzten angeforderten Bericht getätigt wurden.

12. Telekommunikationsnetzwerk nach irgendeinem vorhergehenden Anspruch, bei dem die übertragene Information von einem Netzwerk-Abrechnungssystem erhaltene Kosteninformation einschließt.

13. Telekommunikationsnetzwerk nach irgendeinem vorhergehenden Anspruch, weiterhin mit Servereinrichtungen, die eine Verbindung zu einem Paketvermittlungsnetzwerk aufweisen und auf einen Kundenanschlusszugriff auf den Server reagieren, um einen Anrufaufzeichnungsbericht bezüglich einer Anrufender-Teilnehmer-Telefonleitung bereitzustellen.

14. Telekommunikationsnetzwerk nach Anspruch 13, wobei das Paketvermittlungsnetzwerk das Internet ist.

## Revendications

1. Réseau de télécommunication (1) comprenant une pluralité de commutateurs pour fournir des services de téléphonie commutée entre des abonnés (3), le réseau comprenant :
des moyens (9) pour stocker un enregistrement pour chaque appel traversant le système, chaque enregistrement comprenant des données identifiant un demandeur, un numéro de demandé, la durée de l'appel et l'heure de l'appel ;
des moyens (2) sensible à la signalisation pour récupérer un ou plusieurs des enregistrements associés à un demandeur particulier et des moyens pour émettre de l'information dérivée à partir desdits enregistrements associés ; **caractérisé en ce que**
la signalisation provient d'un abonné demandeur sur une ligne associée au réseau, et le demandeur particulier est identifié à partir de ladite ligne.

2. Réseau de télécommunication selon la revendication 1, dans lequel le demandeur particulier est identifié à partir de l'identité de la ligne appelant associée à ladite ligne.

3. Réseau de télécommunication selon la revendication 1 ou 2, dans lequel l'abonné demandeur peut choisir un moyen d'émission à partir d'une pluralité de moyens d'émission.

4. Réseau de télécommunication selon la revendication 1, 2 ou 3 dans lequel l'émission de l'information se fait au moyen d'un dispositif dont la sortie est la parole.

5. Réseau de télécommunication selon la revendication 4, dans lequel l'abonné demandeur peut interrompre l'émission de l'information afin de fournir des instructions supplémentaires concernant la livraison.

6. Réseau de télécommunication selon l'une quelconque des revendications précédentes, dans lequel l'émission de l'information est effectuée vers un télécopieur.

7. Réseau de télécommunication selon la revendication 6, dans lequel des moyens de commande du réseau stockent un numéro de téléphone respectif pour un télécopieur auquel on transmet l'information en relation avec l'abonné demandeur particulier.

8. Réseau de télécommunication selon la revendication 6, dans lequel l'abonné demandeur est invité à saisir un numéro de téléphone vers lequel un enregistrement de télécopie est à émettre.

9. Réseau de télécommunication selon la revendication 1 ou la revendication 2, dans lequel l'information est émis vers une adresse de courrier électronique.

10. Réseau de télécommunication selon l'une quelconque des revendications précédentes, dans lequel l'abonné demandeur est invité à saisir un code secret pour vérifier une autorisation à recevoir l'information émise.

11. Réseau de télécommunication selon l'une quelconque des revendications précédentes, dans lequel le nombre d'enregistrements dans un compte-rendu peut être choisi à partir de :
(i) un nombre prédéterminé d'enregistrements d'appel ;
(ii) un nombre d'enregistrements d'appel sur une période de temps prédéterminé ; et
(iii) les appels réalisés depuis le dernier compte-rendu demandé.

12. Réseau de télécommunication selon l'une quelconque des revendications précédentes, dans lequel l'information émise comprend de l'information de taxation obtenue à partir d'un système de facturation du réseau.

13. Réseau de télécommunication selon l'une quelconque des revendications précédentes, comprenant en outre des moyens formant serveur présentant une connexion à un réseau à commutation par paquets et sensible à un accès au serveur par un terminal d'abonné, pour fournir un compte-rendu d'enregistrement d'appel concernant une ligne téléphonique d'abonné demandeur.

14. Réseau de télécommunication selon la revendication 13, dans lequel le réseau à commutation par paquets est Internet.
